(19) Europäisches Patentamt
European Patent Office
Office européen des brevets

(11) **EP 2 507 767 B1**

(12) **EUROPEAN PATENT SPECIFICATION**

(45) Date of publication and mention
of the grant of the patent:
**13.06.2018 Bulletin 2018/24**

(51) Int Cl.:
***G06T 7/246*** *(2017.01)*

(21) Application number: **10796504.8**

(22) Date of filing: **06.12.2010**

(86) International application number:
**PCT/NL2010/050823**

(87) International publication number:
**WO 2011/068412 (09.06.2011 Gazette 2011/23)**

(54) **CAMERA MOVEMENT ESTIMATION**

KAMERABEWEGUNGSSCHÄTZUNG

ESTIMATION DU MOUVEMENT DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2009 EP 09178088**

(43) Date of publication of application:
**10.10.2012 Bulletin 2012/41**

(73) Proprietor: **Nederlandse Organisatie voor
toegepast-
natuurwetenschappelijk onderzoek TNO
2595 DA 's-Gravenhage (NL)**

(72) Inventor: **ESTEBAN, Isaac
NL-2134 XW Hoofddorp (NL)**

(74) Representative: **V.O.
P.O. Box 87930
2508 DH Den Haag (NL)**

(56) References cited:
**EP-A2- 0 786 739      US-A1- 2003 044 048
US-A1- 2009 207 257      US-A1- 2009 279 741**

- **AVIDAN S ET AL: "THREADING FUNDAMENTAL
MATRICES", IEEE TRANSACTIONS ON
PATTERN ANALYSIS AND MACHINE
INTELLIGENCE, IEEE SERVICE CENTER, LOS
ALAMITOS, CA, US LNKD-
DOI:10.1109/34.899947, vol. 23, no. 1, 1 January
2001 (2001-01-01), pages 73-77, XP001008997,
ISSN: 0162-8828**
- **NISTER D ET AL: "Visual odometry", COMPUTER
VISION AND PATTERN RECOGNITION, 2004.
CVPR 2004. PROCEEDINGS OF THE 2004 IEEE
COMPUTER SOCIETY CONFERENCE ON
WASHINGTON, DC, USA 27 JUNE - 2 JULY 2004,
IEEE COMPUTER SOCIETY, PISCATAWAY, NJ,
USA LNKD- DOI:10.1109/CVPR.2004.1315094,
vol. 1, 27 June 2004 (2004-06-27), pages 652-659,
XP010708622, ISBN: 978-0-7695-2158-9**

**Description**

Field of the invention

The invention relates to a system and method for estimating camera movement, such as in a vehicle with a camera mounted on the vehicle.

Background

It is known to use camera images to compute three dimensional models of the environment of the camera. In stereoscopy, for example a pair of cameras at a known spatial offset to each other is used, and the difference between the locations in the images from the camera where matching features are visible is used to compute the distances from the camera to the three dimensional objects that give rise to the features. Once a three dimensional model is known, it is possible to compute pose changes of a camera form images captured with the camera at different camera poses. As used herein "pose changes" may involve translations and rotations of the camera.

US 2009/0207257 discloses a method of egomotion estimation. Pose changes are computed with respect to an anchor image where correspondences between the images and 3D estimates of these points are available. When a new image is processed a search is made for corresponding features in a previous image. The correspondences are use to identify correspondences between features in the new image and in the anchor image. The pose change is computed iteratively from an updated structure of correspondences, by searching for a pose change that minimizes the reprojection errors onto the anchor frame.

After correction for rotation, the parameters of translations can be computed from the difference between the image locations of matching features representing a nearby object, given the three dimensional position of the object. The parameters of rotations can be computed from the overall pattern of changes of the image locations of matching features, or from changes of the image locations where far off objects are visible, usually without requiring a three dimensional model..

The computation of pose changes may use three dimensional models derived from any source, such as from stereoscopic measurements. However, for various reasons it may be advantageous to use images from a single moving camera to obtain the three dimensional model as well. In this case, model construction also involves the determination of the translation and rotation of the camera, to provide a substitute for the known relative translation and rotation cameras in a stereo pair. Ultimately, this form of model construction works in the same way as for stereoscopy, except that the size of the distance between the positions from which the images are captured remains fundamentally unknown if only image information is used. As a result, measurement scale will be relative to this unknown distance instead of relative to a distance between a pair of stereoscopic cameras. Otherwise, the resulting three dimensional model from images with a moving camera has the same properties as that of a stereoscopic pair, such as greater accuracy for nearby objects etc.

US 2009/0207257 computes the pose of each image relative to the 3D model corresponding to the same anchor image, unless the pose change becomes too large. In the latter case a new anchor image is selected. Intermediate (previous) images between the new image and the anchor image are used to find correspondences between features in new images and the anchor image. No suggestion is made that the intermediate images are used to compute the parameters of the pose change: this is done using the 3D model corresponding to the anchor image. In this computation US 2009/0207257 determines the entire pose change between the current image and the anchor image (both direction and scale of motion) by minimizing the reprojection errors.

Inevitably the result of this type of computation is subject to errors, for example due to noise. Noise may result in errors in the measured image locations of matching features, failure to detect some matching features, etc, which in turn results in errors in the estimated parameters of pose changes. It has been found that the use of a three dimensional model obtained from images with a moving camera to determine camera translation parameters gives rise to considerable inaccuracy.

US 2003/0044048 discloses a computation of pose changes from bundle adjustment. Global bundle adjustment and local bundle adjustment for a series of images are distinguished. Global bundle adjustment involves combine selection of pose changes between all image to minimize reprojection errors. Local bundle adjustment involves minimizing reprojection errors in triplets of images, which allows more corresponding features to be used. As in US 2009/0207257 the entire pose change (both direction and scale of motion) is determined by minimizing the reprojection errors.

Summary

Among others, it is an object to provide for an improvement in the accuracy of the determination of camera translation using images from a moving camera.

A method according to claim 1 is provided. Herein the propagation of errors is carefully controlled. A first, second and third image are captured from successive positions.

The specific roles of the images in the determination of camera movement are selected to reduce error propagation. The first and second images are used to determine information representing distances to objects that are visible at image locations in the first and second image. The second and third images are used to determine at least a direction of the translation between capture of the second and third image, without using the first image in the computation of the direction. Methods to compute distances and directions of translation from images are known per se. Next, the direction of translation from the second and third image is combined with the information representing the distances to estimate the amount of translation.

By means of this selective way of combining information from different images, it is prevented that errors (e.g. due to noise) from the combination of the first and second image propagate into errors in the determination of the direction of translation between capture of the second and third image. A cross-influence is allowed only when the amount of translation is subsequently determined. This approach reduces the overall errors. Moreover it has been found that in this way the remaining determination of the amount of translation can be reduced to a least square estimation wherein the errors due the combination of the first and second image enter in a well conditioned linear way that prevents unpredictable ill conditioned error propagation. The error is reduced compared to conventional techniques, wherein the direction and size of translation are estimated together by matching the third image to a three dimensional model.

The determination of the amounts of translation may be part of an ongoing process, wherein a succession of an arbitrary number of images is captured, wherein each newly captured image is treated as said third image to determine an amount of movement at a scale defined by processing of previous images.

As used herein, the objects that are visible at image locations may be physical three dimensional objects or the visible objects may be features of physical objects or features of combinations of physical objects that are visible side by side. The determined distances will be relative to a scale that may be unknown, for example relative to an unknown translation distance between capture of the first and second image. The distances may be represented implicitly in terms of coordinates of three dimensional locations of the objects.

The amount of translation may be determined by means of back projection of such three dimensional locations and comparison of the back projected locations with actual image locations. Accordingly, in an embodiment the computation of the amount of translation comprises selection of a value of the amount of translation along said direction of translation where selection of the value minimizes a deviation between back projections of the three dimensional positions and actual image locations where the objects are visible in the third image.

In an embodiment the information representing the distances that is used to determine the amount of translation may be determined from the first and second image, independent of the third image. Later on, once the amount of translation has been estimated, information obtained using the third image may be used to update the information representing the distances, for example to obtain three dimensional coordinates with improved accuracy. The information representing the distances that is used to determine the amount of translation may comprise such three dimensional coordinates determined from the first and second image as well as further images, for example images captured before the first and second images.

In addition to the direction of translation, camera rotation between capture of the second and third image may be computed from the second and third image independent of the first image. These two quantities may be computed together. This prevents error propagation from the first image. The image locations at which objects are visible represent directions from the camera to the three dimensional locations of the objects. Image locations and these directions will be used interchangeably. Absent camera rotation there is an invariant direction corresponding to the direction of translation. The differences between directions in which objects are visible in the second and third images correspond to radial movements from or toward the invariant direction.

When there is camera rotation, the method may involve determining a transformation of image locations in the third image that correspond to an inverse of the effect of the camera rotation, by searching for a transformation that reduces the difference between image locations in the second and third image to substantially radial motions to or from an invariant point and that corresponds to a rotation. In this case the image location of the resulting invariant point defines the direction of translation between capture of the second and third image. Instead of a transformation of image locations in the third image, a transformation of image locations in the second image or a combination of transformations of image locations in the second and third image may be used to determine the invariant point. A least square fit that minimizes deviations from radial motion may be used to determine parameters of the transformation.

In an embodiment computation of the amount of translation is performed by determining a solution of an equation defining a minimum, as a function of said amount of translation, of a sum of squares of deviations between directions in which the objects are visible in the third image and predictions of these directions based on said distances derived from the first and second images and a translation along said direction of translation derived from the second and third image, with a size of the translation according to said amount of translation.

In an embodiment an image processing system according to claim 6 is provided. Herein error propagation is reduced in the same way as in the method of claim 1. A computer program product, such as a computer readable disk, semi-conductor memory or other computer readable medium or a signal may be provided with a computer program of instructions to make a programmable computer perform this method. The system may be part of a vehicle with a camera, which makes it possible to estimate motion of the vehicle with low error from images captured by the camera during movement of the vehicle.

Brief description of the drawing

These and other objects and advantageous aspects will become apparent from a description of exemplary embodiments, using the following figures.

Figure 1 schematically shows a vehicle with a camera
Figure 2 shows a flow-chart of vehicle a translation estimation
Figures 3a-c illustrate computation of an amount of translation
Figures 4, 4a show a comparison of results of different methods of estimating translation
Figures 5 show a comparison of results of different methods of estimating rotation

Detailed description of exemplary embodiments

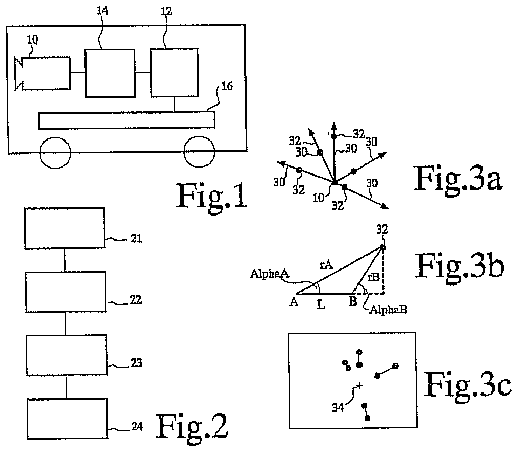

Figure 1 shows a vehicle comprising a camera 10 mounted on the vehicle, a data processor 12, a memory coupled to camera 10 and data processor 12. The vehicle has a drive control unit 16 coupled to data processor 12, comprising a motor and steering gear for example. In operation data processor controls drive control unit 16 to direct movement of the vehicle. Camera 10 captures temporally successive images of an environment of the vehicle, as seen from the vehicle and stores resulting image data in memory 14. Data processor 12 processes the images to determine translation of the vehicle relative to the environment.

Figure 2 shows a flow chart of the determination of translation. By way of example, an embodiment is shown wherein successive translations are determined in cycles of processing that each use of respective pair of images that have been captured temporally successively. Each image pair comprises the most recently captured image of the relevant cycle and the most recently captured image of the previous cycle. In addition, each cycle involves the use of estimated distances to points from the environment that are visible at locations in the most recently captured image of the previous cycle.

In a first step 21 of the cycle, memory 14 has the most recently captured image from the previous cycle in storage. The camera 10 captures a next image and stores it in memory 14 to form an image pair of that next captured image and the most recently captured image of the previous cycle.

In a second step 22 data processor 12 searches for matching image parts in images of the image pair. The search for matching image parts results in a set of location pairs (p1, p2) of locations in the images of the pair at which matching image content was detected. The difference between locations in each location pair is a result of translation and rotation of the vehicle between capturing the images of the image pair. Translation has the effect that the locations at which points of the environment are visible in the images move by smaller or larger amounts dependent on the distance of the points. Rotation has the effect of moving the locations independent on the distance.

In a third step 23 data processor 12 estimates parameters of the rotation and the direction of translation from the location pairs, as will be explained in the following.

The amount of translation L (the size of the translation vector) is estimated separately, in a fourth step 24. In fourth step 24 data processor 12 retrieves distances associated with points visible at the image locations in the oldest image of the image pair, obtained from a previous processing cycle. From these distances and the location pairs (p1, p2) for the current cycle, data processor 12 estimates an amount of translation L of the vehicle.

In an embodiment, the distances are defined in terms of three dimensional positions of points that are visible in the images. For any given translation vector, the image locations where these points will be visible can be computed from these three dimensional positions. This is called back projection of points onto back-projected image locations. In the embodiment, back projection is used for translation vectors along the direction of translation that was determined in third step 23. The amount of translation L is estimated by identifying a vector along that direction that minimizes a sum of square differences between the actual image locations p2 in the most recent image where the points are visible and the back-projected image locations p' obtained with the vector. The length of this vector is used as an estimate for the amount of translation L.

In another example of an embodiment, data processor 12 may determine the position of the invariant point in third step 23 and derive the estimation of the amount of translation L from the amounts of radial movement in the location pairs (p1, p2), in directions radiating from the invariant point.

In a fourth step 24 data processor 12 also estimates the distances to the points visible in the most recent image of the image pair, for use in the next cycle. After fourth step 24 the process returns to first step 21, to receive and process a next captured image, using the distances from fourth step 24 to compute the amount of translation L of the vehicle in third step 23.

Figure 3a illustrates the computation of the amount of translation L and the distances. The image locations where points are visible effectively represent measurements of the ray directions 30 from camera 10 in which the points are located. The fact that a point 32 from the environment is visible at an image position means that the point 32 lies in the ray direction 30 corresponding to the image location. Movement of camera 10 has the effect of changing the ray direction 30 in which a point 32 of the environment is visible and thereby its image location.

Figure 3b illustrates the parameters involved in the change of angle of the ray direction, in the case of camera translation from a point A to a point B. At the point A the distance to a point 32 is rA and the angle between the direction to the point and the direction of movement is alphaA. Similarly at the point B the distance to a point 32 is rB and the angle between the direction to the point and the direction of movement is alphaB. The distance of translation is L. The triangle formed by the points A, B and X2 has angles alphaA, 180-alphaB and AlphaB-AlphaA and sides L, rB, rA. From the sine rule, which states that the ratio between the sine of the angle at a corner of a triangle and the length of the leg of the triangle facing that corner is the same for all corners, it follows that

$$\text{rB* sin(alphaB-alphaA)= L * sin (alphaA)}$$

and

$$\text{rA* sin(alphaB-alphaA)= L * sin (alphaB)}$$

From the former relation rB can be determined given L and the angles alphaA, alphaB (i.e. from the image locations where the point X2 is visible in the images from points A and B). From the latter L can be determined given the angles alphaA, alphaB and the distance rA.

Although relations between the parameters of rotation and translation and angles between ray directions have been described, it should be realized that these relations correspond to relations between the parameters of rotation and translation and image locations, because there is a one to one correspondence between ray directions and image locations. Moreover, usually an approximation of the equation for small translation and/or rotation may be used.

In image space, the direction of translation defines an invariant point, that is, an image location (or a notional location in image space outside the image) onto which, absent camera rotation, the same environmental point is projected at both positions A and B, i.e. a point that does not change during translation absent camera rotation.

As shown in figure 3c, translation of the camera without rotation has the effect of changing the angle between the ray direction 30 and the direction of translation. In the case of forward translation these angles grow for all points, the points appearing to flee radially from the invariant location 34, the amount of radial displacement decreasing with three dimensional distance between the point and the camera. Camera rotation adds a rotation of the ray directions around a ray direction that corresponds to a rotation axis. Camera rotation can be performed without translation. In other words, the effect of rotation on the image location where a point is visible does not depend on the translation of the camera or the distance to the point. Conversely camera rotation can be undone by inverse camera rotation or a transformation of image positions corresponding to the inverse camera rotation without translation.

The rotation axis generally will not coincide with the direction of translation. Thus rotation has the effect that the difference between the corresponding positions where corresponding 3D points are imaged in two images from different camera positions is not simply one of radial motion from or toward an invariant point. But there is a transformation of the image positions in one or both of the images, the transformation corresponding to an inverse rotation and reducing the differences between the positions in images from different camera positions to such a radial motion. The determination of depth from a pair of images may comprise first determining this transformation for the pair of images, followed by a determination of depths of individual 3D points, based on the different angles between the direction of the invariant point and the directions in which the 3D is visible in the pair of images. The position of the invariant point corresponds to the direction of translation of the camera position. A best fit to the transformation may be determined, i.e. a transformation that corresponds to a rotation and minimizes deviations of point motion from radial motion from a common invariant point

Successive processing cycles involve a first, second and third image that are captured temporally successively, the first and second image forming a first image pair and the second and third image forming a second image pair. The distance to points visible in the second image are determined from the first image pair, without using the second pair. Similarly, a rotation and a direction of translation between capture of the second and third image is determined from the second pair, without using the first pair. Subsequently the amount of translation is determined from the distances that were obtained from the first and second image and the direction of translation that was determined from the second and third image.

It should be noted that this way of determining distances prevents errors (e.g. due to noise) in the determination of the distances from the first pair from influencing the determination of the rotation and direction of translation from the second pair. A cross-influence is allowed only when the amount of translation is subsequently determined. Thus errors are reduced. Moreover, it has been found that the determination of the translation can be performed in a way in which the errors have a limited effect.

The determination of distance to points visible in the second image involves detecting location pairs in the first and second image where the same point in the environment is visible. From a set of these location pairs for the first image pair, a transformation corresponding to a 3D rotation is estimated. Similarly, this set of location pairs for the first image pair is used to estimate the location of the invariant point. Given the rotation and the invariant point, the angles alpha1=alphaA, alpha2=alphaB between the ray directions corresponding to the locations in a location pair and the direction of translation of the first image pair can be determined. The distance r2=rB to a point that is visible in the second image may be determined according to

$$r2 * \sin(alpha2\text{-}alpha1) = L12* \sin(alpha1)$$

wherein L12 is the amount of translation between capture of the first and second image that was determined in a previous cycle.

The direction of translation between the images of the second pair is estimated from pairs of image locations of corresponding features in the second image pair, or equivalently pairs of corresponding ray directions, without using the distances determined from the first pair. This may be done for example by estimating the rotation between capture of the second and third image, compensating the measured image locations (ray directions) of one of the second and third image for the effect of the estimated rotation, and determining the location (ray direction) best fitting the intersection of extrapolations of lines through pairs of image locations from the second and third image (arcs on a unit sphere around the camera position and through the ray directions from that position), one of which is compensated for the rotation. This location (ray direction) corresponds to the invariant point.

Given the rotation and the invariant point, the angles alpha2', alpha3 between the ray directions corresponding to the locations in a location pair and the direction of translation of the second image pair can be determined. The amount of translation L23 for the second pair ideally satisfies

$$r2* \sin(alpha3\text{-}alpha2')= L23* \sin(alpha3)$$

Using the distances r2 obtained from the image pair, and the angles alpha2 and alpha3 derived on the basis of the invariant location of the second image, the amount of translation L23 may be estimated. A plurality of location pairs may be used for this computation. In this case the amount of translation L23 may be estimated by minimizing a sum of terms

$$[ L23* \sin(alpha3)\text{-} r2* \sin(alpha3\text{-}alpha2') ]^2$$

summed over the set of location pairs. Herein alpha2 and alpha3 may be derived from the distance of image locations p2, p3 of matching features in the second and third image to the invariant point, or from the lengths of projections of these locations onto a common radial line from the invariant point. The minimum L23 satisfies the expression L23=U/V, where

$$V= \text{Sum} \{ \sin^2(alpha3) \}$$

and

$$U= \text{Sum} \{ r2*\sin(alpha3)*\sin(alpha3\text{-}alpha2') \}$$

the sums being taken over the set of location pairs. It may be noted that in this way the amount of translation is estimated by solving a linear equation. This has the effect or regularizing error propagation of errors in the distances r2 of individual points. Errors appear only in the numerator of the solution. Ill conditioned error propagation is prevented.

Usually, the effect of camera rotation and translation on an image pair can be approximated in a way that makes it unnecessary to use the angles explicitly. In this case the expressions can be replaced by approximate expressions.

An equivalent computation can be performed by back projection. In the case of back projection, three dimensional positions of the points are first determined from previous images, relative to some scale. For any selectable translation vector, the image locations where these points will be visible can be computed from these three dimensional positions. This computation is called back projection for a selected translation vector.

In an embodiment, back projections are considered for selected translation vectors along the direction of translation that was determined in third step 23, based on three dimensional positions determined independent of the third image, for example from the first and second image and/or earlier images. The amount of translation L is estimated by identifying a vector along that direction of translation that minimizes a sum of square differences between the actual image locations p2 in the most recent (third) image where the points are visible and the back-projected image locations p' obtained with the vector, according to the three dimensional positions. The length of this vector is used as an estimate for the amount of translation L. The length may be selected by solving the length from a linear equation that results from the least square condition of by executing a search algorithm that searches in the space of length values for a value that minimizes the sum of the squares.

Again, it should be noted that in these embodiments the steps of determining of the rotation and the direction of translation from the second image pair are performed independent of the first image pair. This prevents errors (e.g. due to noise) in the determination of the distances from the first pair from influencing the determination of the rotation and direction of translation from the second pair. A cross-influence is allowed only when the amount of translation is subsequently determined. Thus errors are reduced.

Data processor 12 processes the images according to this process. Data processor 12 may comprise modules to determine information representing distances, information representing a direction of translation of the camera and an amount of translation. These may be software modules, data processor comprising one or more programmable processor to execute instructions from these modules. Alternatively, part or all of the modules may be hardware modules, comprising circuits constructed to perform these functions. As used herein language that a module is configured to perform specified functions covers the embodiment that the module is a software module with instructions to make a programmable processor perform the function and an embodiment wherein the module is a logic circuit with a specific circuit structure that performs these functions.

A first module may be provided, configured to compute information representing distances from the camera to objects when the second image was captured, using first differences between image locations where objects are visible in the first and second image. A second module may be provided to compute information representing a direction of translation of the camera relative to the objects along which a position of capturing a third image is reached, the direction being computed from second differences between image locations where the objects are visible in the second and third images, independent of the first image. A third module may be provided configured to determine an amount of translation between capture of the second and third image, the amount being computed from the direction of translation, the information representing distances from the camera to the objects and the image locations of the objects in the third image.

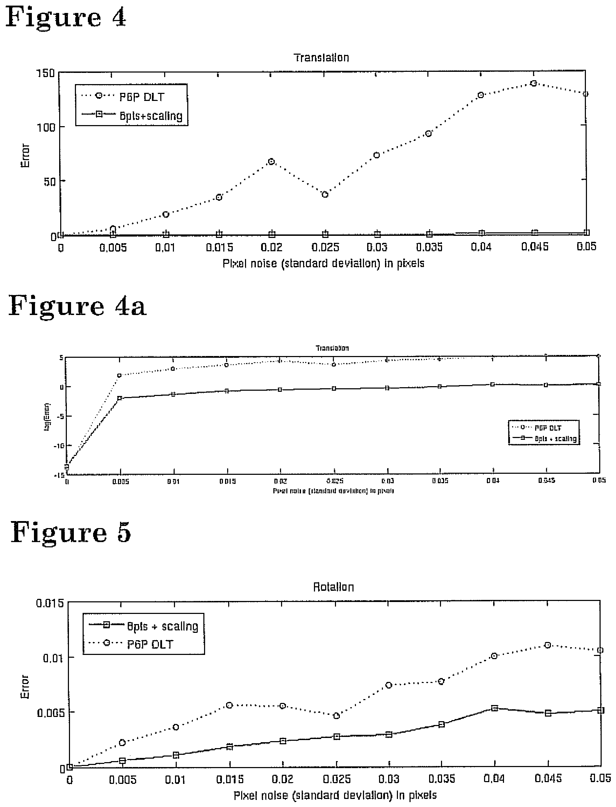

Figures 4, 4a shows a comparison between errors in different methods of computing translation. The error is shown as a function of pixel position noise. In figure 4a the error is shown is on a logarithmic scale. The dashed line shows the error of a reference method, wherein the translation vector (size and direction) and rotation are obtained directly by identifying a vector that minimizes a sum of squared deviations between image locations in the third image and locations in that image predicted from the three dimensional model and the vector. The solid line shows the errors of the present method, using separate determination of the translation direction and third image from the second and third image, without using a three dimensional model, and subsequent determination of the amount of translation L using the distances determined from the first and second image. As can be seen, the present method results in systematically lower errors.

Figure 5 shows a comparison between errors in the camera rotation between capturing different images, determined according to the reference method and the present method. As can be seen the error in the rotation is also reduced.

## Claims

**1.** A method of measuring movement by means of a camera (10) that is transported by said movement, the method comprising

- capturing (21) a first, second and third image with said camera (10) temporally successively at mutually different spatial positions;

- computing information representing distances from the camera to objects when the second image was captured, using first differences between image locations where objects are visible in the first and second image;

- computing (23) information representing an estimated direction of translation of the camera relative to the objects between the capture of the second and third image, using second differences between image locations where the objects are visible in the second and third image, independent of the first image;

- computing (24) translation along said estimated direction between the capture of the second and third image using the information representing distances from the camera to the objects and the image locations in the third image,

**characterized in that**

- said computing (24) translation comprises computing an amount of translation along said estimated direction between the capture of the second and third image using the information representing the estimated direction, the information representing distances from the camera to the objects and the image locations in the third image.

2. A method according to claim 1, wherein the information representing distances from the camera comprises representations of three dimensional positions of the objects, the computation of the information representing distances from the camera comprising computing the three dimensional positions from the image locations in the first and second image, and wherein the computation (24) of the amount of translation comprises selection of a value of the amount of translation along said estimated direction of translation where selection of the value minimizes a deviation between back projections of the three dimensional positions and actual image locations where the objects are visible in the third image.

3. A method according to claim 2, wherein the three dimensional positions of the objects are computed from image locations where the objects are visible in a plurality of images including the first and second image and at least one further image from said camera at a further position, but excluding the third image.

4. A method according to any one of the preceding claims, wherein the computation (24) of the amount of translation is performed by determining a solution of an equation defining a minimum, as a function of said amount of translation, of a sum of squares of deviations between directions in which the objects are visible in the third image and predictions of these directions based on said distances derived from the first and second images and a translation along said estimated direction of translation derived from the second and third image, with a size of the translation according to said amount of translation.

5. A method according to any one of the preceding claims, comprising computing a transformation of image locations of the second and/or third image that substantially reduces the second differences to radial motions to or from an invariant point, independent of the first image, the transformation corresponding to an effect of camera rotation, and determining the estimated direction of translation from the invariant point.

6. An image processing system for measuring camera movement, the system comprising

- a camera (10) configured to capture a first, second and third image temporally successively at mutually different spatial positions;

- a distance determination module (12) configured to compute information representing distances from the camera to the objects that are visible in the images, from first differences between image locations where objects are visible in the first and second one of the images, independent of the third one of the images;

- a translation direction determination module (12), configured to compute information representing an estimated direction of translation of the camera relative to the objects along which a position of capturing the third one of the image is reached, the estimated direction being computed from second differences between image locations where the objects are visible in the second and third one of the images, independent of the first one of the images;

- a translation amount determination module (12) configured to determine translation between the capture of the second and third one of the images, the amount being computed using the information representing distances from the camera to the objects and the image locations of the objects in the third one of the images;

**characterized in that**

- the translation amount determination module (12) is configured to determine an amount of translation along the estimated direction between the capture of the second and third one of the images, the amount being computed from the estimated direction, the information representing distances from the camera to the objects and the image locations of the objects in the third one of the images.

7. A system according to claim 6, wherein

   - the distance determination module (12) is configured to compute three dimensional positions of the objects from the image locations in the first and second image, and wherein
   - the translation amount determination module (12) is configured to select a value of the amount of translation along said estimated direction of translation that minimizes a deviation between back projections of the three dimensional positions and actual image locations where the objects are visible in the third image.

8. A system according to claim 7, wherein the distance determination module (12) is configured to compute the three dimensional positions of the objects from image locations where the objects are visible in a plurality of images including the first and second image and at least one further image, but excluding the third image.

9. A system according to any one of the claims 6 to 8, wherein the translation amount determination module (12) is configured to determine a solution of an equation defining a minimum, as a function of said amount of translation, of a sum of squares of deviations between directions in which the objects are visible in the third image and predictions of these directions based firstly on said distances derived from the first and second images and secondly on a translation along said estimated direction of translation derived from the second and third image, with a size of the translation according to said amount of translation.

10. A vehicle, comprising a system according to any one of claims 6 to 9, with the camera (10) mounted directed at an environment of the vehicle.

11. A computer program product, comprising a program of instructions for a programmable computer that, when executed by the programmable computer, will cause the programmable computer to determine movement from camera images from a camera that is transported by said movement, by performing the following steps

   - receiving (21) a first, second and third image captured temporally successively at mutually different spatial positions from said camera;
   - using first differences between image locations where objects are visible in the first and second image to compute information representing distances from the camera to the objects when the second image was captured, independent of the third image;
   - using (23) second differences between image locations where the objects are visible in the second and third image to compute information representing an estimated direction of translation of the camera relative to the objects between the capture of the second and third image, independent of the first image;
   - using (24) the information representing distances from the camera to the objects and image locations in the third image to compute translation between the capture of the second and third image,
   **characterized in that**
   - said using (24) to compute translation comprises using the information representing the estimated direction of translation of the camera, the information representing distances from the camera to the objects and image locations in the third image to compute an amount of translation along said estimated direction between the capture of the second and third image.


**Patentansprüche**

1. Verfahren zur Bewegungsmessung mittels einer Kamera (10), die von der Bewegung transportiert wird, das Verfahren umfassend

   - die Erfassung (21) eines ersten, zweiten und dritten Bildes mit der Kamera (10), zeitlich aufeinanderfolgend an zueinander verschiedenen räumlichen Positionen;
   - die Berechnung von Information, die Abstände von der Kamera zu Objekten darstellt, wenn das zweite Bild erfasst wurde, unter Verwendung erster Unterschiede zwischen den Bildstellen, wo Objekte in dem ersten und zweiten Bild sichtbar sind;
   - die Berechnung (23) von Information, die eine geschätzte Verschiebungsrichtung der Kamera zu den Objekten zwischen der Erfassung des zweiten und dritten Bildes darstellt, unter Verwendung zweiter Unterschiede zwischen Bildstellen, wo die Objekte in dem zweiten und dritten Bild sichtbar sind, unabhängig von dem ersten Bild;
   - die Berechnung (24) von Verschiebung entlang der geschätzten Richtung zwischen der Erfassung des zweiten und dritten Bildes unter Verwendung der Information, die Abstände von der Kamera zu den Objekten und den Bildstellen in dem dritten Bild darstellt,
**dadurch gekennzeichnet, dass**
- die Berechnung (24) von Verschiebung die Berechnung eines Verschiebungsausmaßes entlang der geschätzten Richtung zwischen der Erfassung des zweiten und dritten Bildes darstellt, unter Verwendung der Information, die die geschätzte Richtung darstellt, welche die Information Abstände von der Kamera zu den Objekten und den Bildstellen in dem dritten Bild darstellt.

2. Verfahren nach Anspruch 1, wobei die Information, die Abstände von der Kamera darstellt, Darstellungen von dreidimensionalen Positionen der Objekte umfasst, welche die Berechnung der Information Abstände von der Kamera darstellt, umfassend die Berechnung der dreidimensionalen Positionen von den Bildstellen in dem ersten und zweiten Bild, und wobei die Berechnung (24) des Verschiebungsausmaßes die Auswahl eines Wertes des Verschiebungsausmaßes entlang der geschätzten Verschiebungsrichtung umfasst, wo die Auswahl des Wertes eine Abweichung zwischen Rückprojektionen der dreidimensionalen Positionen und tatsächlichen Bildstellen, wo die Objekte in dem dritten Bild sichtbar sind, minimiert.

3. Verfahren nach Anspruch 2, wobei die dreidimensionalen Positionen der Objekte anhand von Bildstellen berechnet werden, wo die Objekte in einer Vielzahl von Bildern sichtbar sind, einschließlich des ersten und zweiten Bildes und mindestens eines weiteren Bildes von der Kamera an einer weiteren Position, ausschließlich des dritten Bildes.

4. Verfahren nach einem der vorhergehenden Ansprüche, wobei die Berechnung (24) des Verschiebungsausmaßes durchgeführt wird durch Bestimmung einer Lösung einer Gleichung, die ein Minimum definiert, abhängig von dem Verschiebungsausmaß, einer Summe von Quadraten von Abweichungen zwischen Richtungen, in denen die Objekte in dem dritten Bild sichtbar sind, und Vorhersagen dieser Richtungen auf der Basis der Abstände, abgeleitet von den ersten und zweiten Bildern und einer Verschiebung entlang der geschätzten Verschiebungsrichtung, abgeleitet von dem zweiten und dritten Bild, mit einer Größe der Verschiebung gemäß dem Verschiebungsausmaß.

5. Verfahren nach einem der vorhergehenden Ansprüche, umfassend die Berechnung einer Transformation von Bildstellen des zweiten und/oder dritten Bildes, die im Wesentlichen die zweiten Unterschiede zu radialen Bewegungen zu oder von einem unveränderlichen Punkt, unabhängig von dem ersten Bild, reduziert, die Transformation entsprechend einer Kameradrehwirkung, und Bestimmung der geschätzten Verschiebungsrichtung von dem unveränderlichen Punkt.

6. Bildverarbeitungssystem zur Kamerabewegungsmessung, das System umfassend

- eine Kamera (10), konfiguriert zur Erfassung eines ersten, zweiten und dritten Bildes, zeitlich aufeinanderfolgend an zueinander verschiedenen räumlichen Positionen;
- ein Abstandsbestimmungsmodul (12), konfiguriert zur Berechnung von Information, die Abstände von der Kamera zu den in den Bildern sichtbaren Objekten darstellt, anhand erster Unterschiede zwischen Bildstellen, wo Objekte in dem ersten und zweiten der Bilder sichtbar sind, unabhängig von dem dritten der Bilder;
- ein Verschiebungsrichtungsbestimmungsmodul (12), konfiguriert zur Berechnung von Information, die eine geschätzte Verschiebungsrichtung der Kamera zu den Objekten darstellt, entlang derer eine Erfassungsposition des dritten der Bilder erreicht ist, die geschätzte Richtung berechnet anhand zweiter Unterschiede zwischen Bildstellen, wo Objekte in dem zweiten und dritten der Bilder sichtbar sind, unabhängig von dem ersten der Bilder;
- ein Verschiebungsausmaßbestimmungsmodul (12), konfiguriert zur Bestimmung von Verschiebung zwischen der Erfassung des zweiten und dritten der Bilder, das Ausmaß berechnet unter Verwendung der Information, die Abstände von der Kamera zu den Objekten und den Bildstellen der Objekte in dem dritten der Bilder darstellt;

**dadurch gekennzeichnet, dass**
das Verschiebungsausmaßbestimmungsmodul (12) konfiguriert ist zur Bestimmung eines Verschiebungsausmaßes entlang der geschätzten Richtung zwischen der Erfassung des zweiten und dritten der Bilder, das Ausmaß berechnet anhand der geschätzten Richtung, der Information darstellend Abstände von der Kamera zu den Objekten und den Bildsteller der Objekte in dem dritten der Bilder.

7. System nach Anspruch 6, wobei

- das Abstandsbestimmungsmodul (12) konfiguriert ist zur Berechnung dreidimensionaler Positionen der Objekte anhand der Bildorte in dem ersten und zweiten Bild, und wobei
- das Verschiebungsausmaßbestimmungsmodul (12) konfiguriert ist zur Auswahl eines Wertes des Verschiebungsausmaßes entlang der geschätzten Verschiebungsrichtung, der eine Abweichung zwischen Rückprojektionen der dreidimensionalen Positionen und tatsächlichen Bildstellen, wo die Objekte in dem dritten Bild sichtbar sind, minimiert.

8. System nach Anspruch 7, wobei das Abstandsbestimmungsmodul (12) konfiguriert ist zur Berechnung der dreidimensionalen Positionen der Objekte anhand von Bildstellen, wo die Objekte sichtbar sind in einer Vielzahl von Bildern, einschließlich des ersten und zweiten Bildes und mindestens eines weiteren Bildes, aber ausschließlich des dritten Bildes.

9. System nach einem der Ansprüche 6 bis 8, wobei das Verschiebungsausmaßbestimmungsmodul (12) konfiguriert ist zur Bestimmung einer Lösung von einer Gleichung, definierend ein Minimum, abhängig von dem Verschiebungsausmaß, von einer Summe von Quadraten von Abweichungen zwischen Richtungen, in denen die Objekte sichtbar sind in dem dritten Bild, und Vorhersagen dieser Richtungen, basierend erstens auf den Abständen, abgeleitet von den ersten und zweiten Bildern, und zweitens auf einer Verschiebung entlang der geschätzten Verschiebungsrichtung, abgeleitet von dem zweiten und dritten Bild, mit einer Größe der Verschiebung gemäß dem Verschiebungsausmaß.

10. Fahrzeug, umfassend ein System nach einem der Ansprüche 6 bis 9, mit der Kamera (10) montiert gerichtet auf eine Umgebung des Fahrzeugs.

11. Computerprogrammprodukt, umfassend ein Programm von Befehlen für einen programmierbaren Computer zur Bestimmung von Bewegungen anhand von Kamerabildern von einer Kamera, die von der Bewegung transportiert wird, durch Durchführung folgender Schritte:

- Empfangen (21) eines ersten, zweiten und dritten Bildes, erfasst zeitlich aufeinanderfolgend an zueinander verschiedenen räumlichen Positionen der Kamera;
- Verwendung erster Unterschiede zwischen Bildstellen, wo Objekte in den ersten und zweiten Bildern sichtbar sind, zur Berechnung von Information, die Abstände von der Kamera zu den Objekten darstellt, wenn das zweite Bild erfasst wurde, unabhängig von dem dritten Bild;
- Verwendung (23) zweiter Unterschiede zwischen Bildstellen, wo die Objekte in dem zweiten und dritten Bild sichtbar sind, zur Berechnung von Information, die eine geschätzte Verschiebungsrichtung der Kamera zu den Objekten zwischen der Erfassung des zweiten und dritten Bildes darstellt, unabhängig von dem ersten Bild;
- Verwendung (24) der Information, die Abstände von der Kamera zu den Objekten und Bildstellen in dem dritten Bild darstellt, zur Berechnung von Verschiebung zwischen der Erfassung des zweiten und dritten Bildes,

**dadurch gekennzeichnet, dass**
die Verwendung (24) zur Berechnung von Verschiebung die Verwendung von Information, die die geschätzte Verschiebungsrichtung der Kamera darstellt, umfasst, welche die Information Abstände von der Kamera zu den Objekten und Bildstellen in dem dritten Bild darstellt zur Berechnung eines Verschiebungsausmaßes entlang der geschätzten Richtung zwischen der Erfassung des zweiten und dritten Bildes.


**Revendications**

1. Méthode de mesure d'un mouvement au moyen d'une caméra (10) qui est transportée par ledit mouvement, la méthode comprenant les étapes consistant à

- capturer (21) une première, deuxième et troisième image à l'aide de ladite caméra (10) successivement dans le temps à des positions spatiales mutuellement différentes ;
- calculer des informations représentant des distances de la caméra à des objets lorsque la deuxième image est capturée, en utilisant des premières différences entre des emplacements d'image où des objets sont visibles dans la première et la deuxième image ;
- calculer (23) des informations représentant une direction estimée de translation de la caméra par rapport aux objets entre la capture de la deuxième et la troisième image, en utilisant des secondes différences entre des emplacements d'image où les objets sont visibles dans la deuxième et la troisième image, indépendamment de la première image ;
- calculer (24) la translation le long de ladite direction estimée entre la capture des deuxième et troisième images en utilisant les informations représentant des distances de la caméra aux objets et les emplacements d'image dans la troisième image,

**caractérisée en ce que**

- ledit calcul (24) de la translation comprend le calcul d'une quantité de translation le long de ladite direction estimée entre la capture de la deuxième et la troisième image en utilisant les informations représentant la direction estimée, les informations représentant des distances de la caméra aux objets et les emplacements d'image dans la troisième image.

2. Méthode selon la revendication 1, dans laquelle les informations représentant des distances depuis la caméra comprennent des représentations de positions tridimensionnelles des objets, le calcul des informations représentant des distances depuis la caméra comprenant le calcul des positions tridimensionnelles depuis les emplacements d'image dans la première et la deuxième image, et dans laquelle le calcul (24) de la quantité de translation comprend la sélection d'une valeur de la quantité de translation le long de ladite direction estimée de translation où une sélection de la valeur minimise un écart entre des rétroprojections des positions tridimensionnelles et des emplacements réels d'image où les objets sont visibles dans la troisième image.

3. Méthode selon la revendication 2, dans laquelle les positions tridimensionnelles des objets sont calculées à partir d'emplacements d'image où les objets sont visibles dans une pluralité d'images comprenant les première et deuxième images et au moins une autre image provenant de ladite caméra à une autre position, mais à l'exclusion de la troisième image.

4. Méthode selon l'une quelconque des revendications précédentes, dans laquelle le calcul (24) de la quantité de translation est effectué en déterminant une solution d'une équation définissant un minimum, en fonction de ladite quantité de translation, d'une somme de carrés d'écarts entre des directions dans lesquelles les objets sont visibles dans la troisième image et des prédictions de ces directions sur la base desdites distances dérivées des première et deuxième images et d'une translation le long de ladite direction de translation estimée dérivée des deuxième et troisième images, avec une taille de la translation conforme à ladite quantité de translation.

5. Méthode selon l'une quelconque des revendications précédentes, comprenant de calculer une transformation d'emplacements d'image de la deuxième et/ou de la troisième image qui réduit sensiblement les secondes différences en mouvements radiaux vers ou depuis un point invariant, indépendamment de la première image, la transformation correspondant à un effet de rotation de caméra, et de déterminer la direction estimée de translation depuis le point invariant.

6. Système de traitement d'image pour mesurer un mouvement de caméra, le système comprenant

- une caméra (10) configurée pour capturer successivement dans le temps une première, deuxième et troisième image à des positions spatiales mutuellement différentes ;
- un module de détermination de distance (12) configuré pour calculer des informations représentant des distances de la caméra aux objets qui sont visibles dans les images, à partir de premières différences entre des emplacements d'image où des objets sont visibles dans les première et deuxième des images, indépendamment de la troisième des images ;
- un module de détermination de direction de translation (12), configuré pour calculer des informations représentant une direction estimée de translation de la caméra par rapport aux objets le long de laquelle une position de capture de la troisième des images est atteinte, la direction estimée étant calculée à partir de secondes différences entre des emplacements d'image où les objets sont visibles dans la deuxième et la troisième des images, indépendamment de la première des images ;
- un module de détermination de quantité de translation (12) configuré pour déterminer une translation entre la capture de la deuxième et la troisième des images, la quantité étant calculée en utilisant les informations représentant des distances de la caméra aux objets et les emplacements d'image des objets dans la troisième des images ;

**caractérisé en ce que**

- le module de détermination de quantité de translation (12) est configuré pour déterminer un montant de translation le long de la direction estimée entre la capture de la deuxième et la troisième des images, la quantité étant calculée à partir de la direction estimée, des informations représentant des distances de la caméra aux objets et des emplacements d'image des objets dans la troisième des images.

7. Système selon la revendication 6, dans lequel

- le module de détermination de distance (12) est configuré pour calculer des positions tridimensionnelles des objets à partir des emplacements d'image dans les première et deuxième images, et dans lequel
- le module de détermination de quantité de translation (12) est configuré pour sélectionner une valeur de la quantité de translation le long de ladite direction de translation estimée qui minimise un écart entre des rétroprojections des positions tridimensionnelles et des emplacements réels d'image où les objets sont visibles dans la troisième image.

8. Système selon la revendication 7, dans lequel le module de détermination de distance (12) est configuré pour calculer les positions tridimensionnelles des objets à partir d'emplacements d'image où les objets sont visibles dans une pluralité d'images incluant la première et la deuxième image et au moins une autre image, mais à l'exclusion de la troisième image.

9. Système selon l'une quelconque des revendications 6 à 8, dans lequel le module de détermination de quantité de translation (12) est configuré pour déterminer une solution d'une équation définissant un minimum, en fonction de ladite quantité de translation, d'une somme de carrés d'écarts entre des directions dans lesquelles les objets sont visibles dans la troisième image et des prédictions de ces directions sur la base premièrement desdites distances dérivées des première et deuxième images et deuxièmement d'une translation le long de ladite direction estimée de translation dérivée des deuxième et troisième images, avec une taille de la translation conforme à ladite quantité de translation.

10. Véhicule comprenant un système selon l'une quelconque des revendications 6 à 9, avec la caméra (10) montée dirigée au niveau d'un environnement du véhicule.

11. Produit de programme d'ordinateur, comprenant un programme d'instructions pour un ordinateur programmable qui, lorsqu'il est exécuté par l'ordinateur programmable, va amener l'ordinateur programmable à déterminer un mouvement à partir d'images de caméra provenant d'une caméra qui est transportée par ledit mouvement, en effectuant les étapes suivantes consistant à

- recevoir (21) des première, deuxième et troisième images capturées successivement dans le temps à des positions spatiales mutuellement différentes depuis ladite caméra ;
- utiliser des premières différences entre des emplacements d'image où des objets sont visibles dans la première et la deuxième image pour calculer des informations représentant des distances de la caméra aux objets lorsque la deuxième image est capturée, indépendamment de la troisième image ;
- utiliser (23) des secondes différences entre des emplacements d'image où les objets sont visibles dans la deuxième et la troisième image pour calculer des informations représentant une direction estimée de translation de la caméra par rapport aux objets entre la capture des deuxième et troisième images, indépendamment de la première image ;
- utiliser (24) les informations représentant des distances de la caméra aux objets et des emplacements d'image dans la troisième image pour calculer une translation entre la capture des deuxième et troisième images, **caractérisé en ce que**
- ladite utilisation (24) pour calculer une translation comprend l'utilisation des informations représentant la direction estimée de translation de la caméra, des informations représentant des distances de la caméra aux objets et des emplacements d'image dans la troisième image pour calculer une quantité de translation le long de ladite direction estimée entre la capture des deuxième et troisième images.

Fig.1

Fig.3a

Fig.3b

Fig.2

Fig.3c

# Figure 4

Translation

# Figure 4a

Translation

# Figure 5

Rotation

**REFERENCES CITED IN THE DESCRIPTION**

**Patent documents cited in the description**

- US 20090207257 A
- US 20030044048 A